(19) Europäisches Patentamt
European Patent Office
Office européen des brevets

(11) **EP 3 148 855 B1**

(12) **EUROPÄISCHE PATENTSCHRIFT**

(45) Veröffentlichungstag und Bekanntmachung des Hinweises auf die Patenterteilung:
**01.11.2023   Patentblatt 2023/44**

(21) Anmeldenummer: **15718152.0**

(22) Anmeldetag: **02.04.2015**

(51) Internationale Patentklassifikation (IPC):
**B60W 40/09** (2012.01)   **B60W 30/16** (2020.01)

(52) Gemeinsame Patentklassifikation (CPC):
**B60W 30/16; B60W 40/09;** B60W 2520/10; B60W 2520/105; B60W 2540/00; B60W 2554/801; B60W 2554/804

(86) Internationale Anmeldenummer:
**PCT/EP2015/057357**

(87) Internationale Veröffentlichungsnummer:
**WO 2015/180876 (03.12.2015 Gazette 2015/48)**

(54) **BESTIMMEN EINES KRITISCHEN FAHRZEUGZUSTANDS**

DETERMINING A CRITICAL VEHICLE STATE

DÉTERMINATION D'UN ÉTAT CRITIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2014   DE 102014210174**

(43) Veröffentlichungstag der Anmeldung:
**05.04.2017   Patentblatt 2017/14**

(73) Patentinhaber: **Volkswagen Aktiengesellschaft 38440 Wolfsburg (DE)**

(72) Erfinder: **PASCHEKA, Patrick 2582 EN Den Haag (NL)**

(56) Entgegenhaltungen:
EP-A1- 2 388 160       DE-A1-102013 015 371
US-A1- 2012 161 980    US-A1- 2012 323 403

EP 3 148 855 B1

**Beschreibung**

Die vorliegende Erfindung betrifft die Bestimmung eines kritischen Zustands eines Fahrzeugs.

Die DE 103 56 307 A1 beschreibt die Warnung eines Fahrers eines Fahrzeugs vor einer Kollision abhängig von einer Verzögerung des vor dem Fahrzeug fahrenden Fahrzeugs, einer eigenen Verzögerung des Fahrzeugs und eine Reaktionszeit des Fahrers unter Berücksichtigung des Abstands zwischen den Fahrzeugen und einer Relativgeschwindigkeit.

Die DE 10 2004 029 369 A1 offenbart einen Spurwechselassistent für ein Fahrzeug, wobei das Verkehrsumfeld einschließlich des Verkehrs auf einer Nebenspur erfasst wird.

Die DE 10 2006 059 915 A1 bestimmt eine an eine Verkehrssituation angepasste Fahrzeugführung, wobei die Relativgeschwindigkeit und der Abstand zwischen dem Fahrzeug und einem vorausfahrenden Fahrzeug ermittelt wird.

Die US 2012/0161980 A1 offenbart ein Fahrerassistenzsystem mit wenigstens einem Umgebungssensor, einer Auswertungseinheit zum Erkennen einer potentiellen gefährlichen Verkehrssituation und wenigstens einem von der Auswertungseinheit ansprechbaren Aktor zum Ausführen eines Warneingriffs oder eines gefahrmindernden Eingriffs je nach von der Auswertungseinheit erkanntem Gefährdungsgrad der Verkehrssituation.

Die DE 10 2008 023 132 A1 offenbart ein Beweissicherungssystem zum Erfassen von nötigendem Drängeln im Straßenverkehr zur privaten Nutzung im PKW.

Nach dem Stand der Technik existieren bereits warnende und eingreifende Systeme für Situationen bei einem Fahrzeug, in denen eine Kollision mit einem vorausfahrenden Fahrzeug droht. Daneben existieren allerdings auch Situationen, bei denen zwar keine Kollision droht, welche aber dennoch aufgrund einer drohenden Unterschreitung eines Sicherheitsabstands zu dem vorausfahrenden Fahrzeug als kritisch zu bewerten sind. Daher existiert ein auch im Verkehrsrecht bekannter geschwindigkeitsabhängiger Mindestabstand, welcher auch als "Tacho halbe" bekannt ist. Dabei wird eine Unterschreitung dieses geschwindigkeitsabhängigen Sicherheitsabstands nicht pauschal als kritisch angesehen. Eine entsprechend kurzfristige Unterschreitung des Sicherheitsabstands, wie sie häufig bei Fahrstreifenwechseln oder bei Annäherungen an ein vorausfahrendes Fahrzeug vorkommen, wird durch die Rechtsprechung toleriert und nicht sanktioniert. Erst wenn eine solche Unterschreitung des geschwindigkeitsabhängigen Mindestabstands bzw. Sicherheitsabstands eine vorbestimmte Schwelle übersteigt, wird sie laut geltender Verkehrsrechtsprechung sanktioniert.

Daher stellt sich die vorliegende Erfindung die Aufgabe, dem Fahrer eines Fahrzeugs eine Information bereitzustellen, anhand welcher der Fahrer frühzeitig erkennt, ob eine solche Unterschreitung des geschwindigkeitsabhängigen Mindestabstands bzw. Sicherheitsabstands auftreten wird.

Erfindungsgemäß wird diese Aufgabe durch ein Verfahren zum Bestimmen eines Fahrzeugzustands nach Anspruch 1 und 4em4 durch eine Vorrichtung zur Bestimmung eines Fahrzeugzustands nach Anspruch 5 gelöst. Die abhängigen Ansprüche definieren bevorzugte und vorteilhafte Ausführungsformen der vorliegenden Erfindung.

Im Rahmen der vorliegenden Erfindung wird ein Verfahren zur Bestimmung eines Fahrzeugzustands, d.h. eines Zustands eines Fahrzeugs, bereitgestellt. Dabei umfasst das erfindungsgemäße Verfahren folgende Schritte:

- Bestimmen einer Länge einer kritischen Fahrstrecke eines ersten Fahrzeugs. Dabei ist die kritische Fahrstrecke als diejenige Fahrstrecke definiert, auf welcher das erste Fahrzeug einen von der Geschwindigkeit des ersten Fahrzeugs abhängigen Mindestabstand zu einem vor dem ersten Fahrzeug fahrenden zweiten Fahrzeug ständig unterschreitet.
- Bestimmen des Fahrzeugzustands als kritisch, wenn die Länge der kritischen Fahrstrecke größer als ein vorbestimmter Längenschwellenwert (d.h. eine vorbestimmte Länge) ist.

Bei dem Fahrzeug, für welches der Fahrzeugzustand bestimmt wird, kann es sich dabei um das erste Fahrzeug oder um das zweite Fahrzeug handeln. Wenn es sich bei dem Fahrzeug, für welches der Fahrzeugzustand bestimmt wird, um das erste Fahrzeug handelt, wird quasi diejenige kritische Fahrstrecke bestimmt, auf welcher das (erste) Fahrzeug den geschwindigkeitsabhängigen Mindestabstand (genauer den von der Geschwindigkeit des (ersten) Fahrzeugs abhängigen Mindestabstand) ständig unterschreitet. Wenn es sich bei dem Fahrzeug, für welches der Fahrzeugzustand bestimmt wird, um das zweite Fahrzeug handelt, wird quasi diejenige kritische Fahrstrecke bestimmt, auf welcher das erste Fahrzeug seinen geschwindigkeitsabhängigen Mindestabstand (genauer den von der Geschwindigkeit des ersten Fahrzeugs abhängigen Mindestabstand) zu dem (zweiten) Fahrzeug ständig unterschreitet.

Anhand des erfindungsgemäßen Verfahrens kann demnach bestimmt werden, wie lang die kritische Fahrstrecke ist, auf welcher der geschwindigkeitsabhängige Mindestabstand unterschritten wird. Wenn der vorbestimmte Längenschwellenwert gleich der von der ständigen Rechtsprechung aktuell angegebenen Streckenlänge von 250 m gesetzt wird, auf welcher der geschwindigkeitsabhängige Mindestabstand zum vorher fahrenden Fahrzeug unterschritten werden darf, ohne dass rechtliche Folgen für den Fahrzeugführer zu erwarten sind (siehe BGH NJW69, 939; OLG Köln VM 83 Nr. 80), wird der Fahrzeugzustand vorteilhafterweise erst dann als kritisch eingestuft, wenn das erste Fahrzeug länger als 250 m diesen geschwindigkeitsabhängigen Mindestabstand unterschreitet.

Die Länge der kritischen Fahrstrecke kann dabei abhängig von einem oder von mehreren Parametern bestimmt werden, welche aus der folgenden Parametergruppe ausgewählt werden:

- Die Beschleunigung des ersten Fahrzeugs. Dabei wird unter der Beschleunigung insbesondere eine negative konstante Beschleunigung verstanden, mit welcher die Geschwindigkeit des ersten Fahrzeugs verringert wird.
- Die Beschleunigung des zweiten Fahrzeugs. Dabei wird unter der Beschleunigung insbesondere eine negative konstante Beschleunigung verstanden, mit welcher die Geschwindigkeit des zweiten Fahrzeugs verringert wird.
- Die Reaktionszeit des Fahrers des ersten Fahrzeugs. Dabei wird unter der Reaktionszeit diejenige Zeit verstanden, welche verstreicht, bis das erste Fahrzeug mit der Beschleunigung des ersten Fahrzeugs beschleunigt bzw. abbremst.
- Eine Zeitlücke bzw. eine Zeitspanne, mit welcher der geschwindigkeitsabhängige Mindestabstand vor dem ersten Fahrzeug definiert wird.
- Die aktuelle Geschwindigkeit des ersten Fahrzeugs, d.h. die Geschwindigkeit des ersten Fahrzeugs zum aktuellen Zeitpunkt, zu dem der Fahrzeugzustand bestimmt wird.
- Die aktuelle Geschwindigkeit des zweiten Fahrzeugs, d.h. die Geschwindigkeit des zweiten Fahrzeugs zum aktuellen Zeitpunkt.
- Der aktuelle Abstand zwischen dem ersten Fahrzeug und dem zweiten Fahrzeug, d.h. der Abstand zwischen den Fahrzeugen zum aktuellen Zeitpunkt.

Anhand der vorab beschriebenen Parameter kann die Länge der kritischen Fahrstrecke bestimmt werden. Dabei können die aktuelle Geschwindigkeit des ersten Fahrzeugs, die aktuelle Geschwindigkeit des zweiten Fahrzeugs und der aktuelle Abstand zwischen dem ersten und dem zweiten Fahrzeug mit Hilfe von Sensoren desjenigen Fahrzeugs, für welches der Fahrzeugzustand zu bestimmen ist, erfasst werden.

Die Länge et der kritischen Fahrstrecke kann gemäß der folgenden Gleichung (G 1) berechnet werden, wenn das erste Fahrzeug die kritische Fahrstrecke nicht vor der Reaktionszeit $t_{Reakt}$ erreicht, d.h. wenn das erste Fahrzeug den geschwindigkeitsabhängigen Mindestabstand erst nach Ablauf der Reaktionszeit unterschreitet, so dass das erste Fahrzeug bereits die entsprechende (in der Regel negative) Beschleunigung aufweist, wenn sich das erste Fahrzeug auf der kritischen Fahrstrecke befindet. In ähnlicher Weise kann die Länge et der kritischen Fahrstrecke gemäß der folgenden Gleichung (G 2) berechnet werden, wenn das erste Fahrzeug die kritische Fahrstrecke vor der Reaktionszeit erreicht, d.h. wenn das erste Fahrzeug den geschwindigkeitsabhängigen Mindestabstand bereits unterschreitet, wenn die Reaktionszeit abgelaufen ist, so dass das erste Fahrzeug den ersten Teil der kritischen Fahrstrecke ohne die entsprechende (in der Regel negative) Beschleunigung fährt.

$$et = 2c_5\big[v_2(0) + a_2\big(c_4 + t_{Reakt}\big)\big] \qquad \text{(G 1)}$$

$$et = \big(3c_5 - c_4\big)v_2(0) + \frac{a_2}{2}\big(c_4 + c_5\big)^2 \qquad \text{(G 2)}$$

Dabei definieren die folgenden Gleichungen (G 3) bis (G7) die Konstanten $c_1$ bis $c_5$.

$$c_5 = \sqrt{c_4{}^2 - 2\frac{c_1 - c_2}{a_1 - a_2}} \qquad \text{(G 3)}$$

$$c_4 = \frac{c_3}{a_1 - a_2} \qquad \text{(G 4)}$$

$$c_3 := -\big(dv(0) + a_1 t_{Reakt} - a_2 T_{min}\big) \qquad \text{(G 5)}$$

$$c_2 := v_2(0)T_{min} \qquad \text{(G 6)}$$

$$c_1 := dx(0) + dv(0)t_{\mathrm{Reakt}} + \frac{a_1}{2}t_{\mathrm{Reakt}}{}^2 \qquad\qquad (\mathrm{G}\ 7).$$

Dabei entspricht $a_1$ der konstanten Beschleunigung des zweiten Fahrzeugs, $a_2$ entspricht der konstanten Beschleunigung des ersten Fahrzeugs, $t_{\mathrm{Reakt}}$ der Reaktionszeit des Fahrers des ersten Fahrzeugs, $T_{min}$ der Zeitlücke bzw. Zeitspanne zur Berechnung des geschwindigkeitsabhängigen Mindestabstands zwischen den Fahrzeugen, $dv(0)$ entspricht der aktuellen Geschwindigkeitsdifferenz zwischen den Fahrzeugen, und $dx(0)$ entspricht dem aktuellen Abstand zwischen den Fahrzeugen. Der geschwindigkeitsabhängige Mindestabstand lässt sich insbesondere durch das Produkt aus der Zeitlücke $T_{min}$ und der Geschwindigkeit $v_2(t)$ des ersten Fahrzeugs berechnen.

Gemäß einer erfindungsgemäßen Ausführungsform kann die erfindungsgemäße Bestimmung des Fahrzeugzustands mit einer Hysterese versehen werden. Dazu wird für den Fall, dass der Fahrzeugzustand abhängig von einem Parametersatz als kritisch bestimmt worden ist, ein weiterer Fahrzeugzustand erfindungsgemäß mit einem weiteren Parametersatz bestimmt. Der Fahrzeugzustand wird nur dann auf nicht kritisch zurückgesetzt, wenn der weitere Fahrzeugzustand als nicht kritisch bestimmt wird. Dabei umfassen sowohl der Parametersatz als auch der weitere Parametersatz einen oder mehrere Parameter aus folgender Parametergruppe:

- Die Beschleunigung des ersten Fahrzeugs.
- Die Beschleunigung des zweiten Fahrzeugs.
- Die Reaktionszeit des Fahrers des ersten Fahrzeugs.
- Die Zeitlücke bzw. Zeitspanne $T_{min}$ zur Berechnung des geschwindigkeitsabhängigen Mindestabstands zwischen den Fahrzeugen.
- Der vorbestimmte Längenschwellenwert.

Der Parametersatz wird im Vergleich zu dem weiteren Parametersatz so gewählt, dass unter gleichen Ausgangsbedingungen (z.B. gleichen Werten für $v_1(0)$, $v_2(0)$, $dx(0)$) der weitere Fahrzeugzustand erfindungsgemäß abhängig von dem weiteren Parametersatz immer als kritisch bestimmt wird, wenn der Fahrzeugzustand erfindungsgemäß abhängig von dem Parametersatz als kritisch bestimmt wird. Es ist also nicht möglich, dass der weitere Fahrzeugzustand erfindungsgemäß abhängig von dem weiteren Parametersatz als nicht kritisch bestimmt wird, wenn der Fahrzeugzustand erfindungsgemäß abhängig von dem Parametersatz unter den gleichen Ausgangsbedingungen als kritisch bestimmt worden ist. Dagegen ist es durchaus möglich, dass unter den gleichen Ausgangsbedingungen der weitere Fahrzeugzustand erfindungsgemäß abhängig von dem weiteren Parametersatz als kritisch bestimmt wird, während der Fahrzeugzustand erfindungsgemäß abhängig von dem Parametersatz nicht als kritisch bestimmt wird.

Durch die erfindungsgemäße Wahl des Parametersatz und des weiteren Parametersatzes wird die Bestimmung des Fahrzeugzustands mit der Hysterese versehen, wodurch vorteilhafterweise eine mögliche Sprunghaftigkeit bei der Bestimmung des Fahrzeugzustands, d.h. ein sprunghaftes Wechseln zwischen einem kritischen Fahrzeugzustand und einem unkritischen bzw. nicht kritischen Fahrzeugzustand, verhindert wird.

Im Rahmen der vorliegenden Erfindung wird auch eine Vorrichtung zur Bestimmung eines Fahrzeugzustands bereitgestellt. Dabei umfasst die Vorrichtung einen oder mehrere Sensoren und eine Steuerung. Der oder die Sensoren sind in der Lage, einen aktuellen Abstand zwischen einem ersten Fahrzeug und einem vor dem ersten Fahrzeug fahrenden zweiten Fahrzeug, eine aktuelle Geschwindigkeit des ersten Fahrzeugs und eine aktuelle Geschwindigkeit des zweiten Fahrzeugs zu erfassen. Die Steuerung ist in der Lage, eine Länge der kritischen Fahrstrecke zu bestimmen und den Fahrzeugzustand als kritisch zu bestimmen, wenn diese Länge größer als der vorbestimmte Längenschwellenwert ist. Die kritische Fahrstrecke ist dabei so definiert, dass das auf der kritischen Fahrstrecke fahrende erste Fahrzeug auf der gesamten kritischen Fahrstrecke einen von der Geschwindigkeit des ersten Fahrzeugs abhängigen Mindestabstand zu dem zweiten Fahrzeug unterschreitet.

Die Vorteile der erfindungsgemäßen Vorrichtung zur Bestimmung des Fahrzeugzustands entsprechen im Wesentlichen den Vorteilen des erfindungsgemäßen Verfahrens zum Bestimmen des Fahrzeugzustands, welche vorab im Detail ausgeführt sind, so dass hier auf eine Wiederholung verzichtet wird.

Darüber hinaus ist die erfindungsgemäße Vorrichtung zur Bestimmung des Fahrzeugzustands, insbesondere zur Durchführung aller vorab beschriebenen Ausführungsformen des Verfahrens zum Bestimmen des Fahrzeugzustands, und/oder zur Unterstützung eines Fahrers beim Führen eines Fahrzeugs, insbesondere zur Durchführung aller vorab beschriebenen Ausführungsformen des Verfahrens zur Unterstützung eines Fahrers beim Führen eines Fahrzeugs, ausgestaltet.

Schließlich kann im Rahmen der vorliegenden Erfindung ein Fahrzeug bereitgestellt werden, welches eine erfindungsgemäße Vorrichtung zur Bestimmung des Fahrzeugzustands umfasst.

Es sei explizit darauf hingewiesen, dass bei allen erfindungsgemäßen Ausführungsformen das erste und das zweite Fahrzeug in derselben, aber auch in verschiedenen oder benachbarten Fahrspuren fahren können oder die Fahrspuren wechseln können, während beispielsweise das erste Fahrzeug die kritische Fahrstrecke befährt.

Im Vergleich zum Stand der Technik können durch die vorliegende Erfindung auch Situationen als kritisch eingestuft werden, welche zwar nicht zu einer Kollision führen, aber rechtliche Konsequenzen aufgrund des Unterschreitens des geschwindigkeitsabhängigen Mindestabstands und/oder des geschwindigkeitsunabhängigen Mindestabstands mit sich bringen können.

Die vorliegende Erfindung ist insbesondere für Kraftfahrzeuge mit einem Fahrerassistenzsystem zur Unterstützung des Fahrers geeignet. Selbstverständlich ist die vorliegende Erfindung nicht auf diesen bevorzugten Anwendungsbereich eingeschränkt, da die vorliegende Erfindung beispielsweise auch bei Schiffen oder Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen mit Bezug zu den Figuren im Detail beschrieben.

In Fig. 1 ist schematisch der Verlauf der Geschwindigkeiten und der Entfernung bezüglich eines ersten und eines vor diesem fahrenden zweiten Fahrzeugs über der Zeit dargestellt.

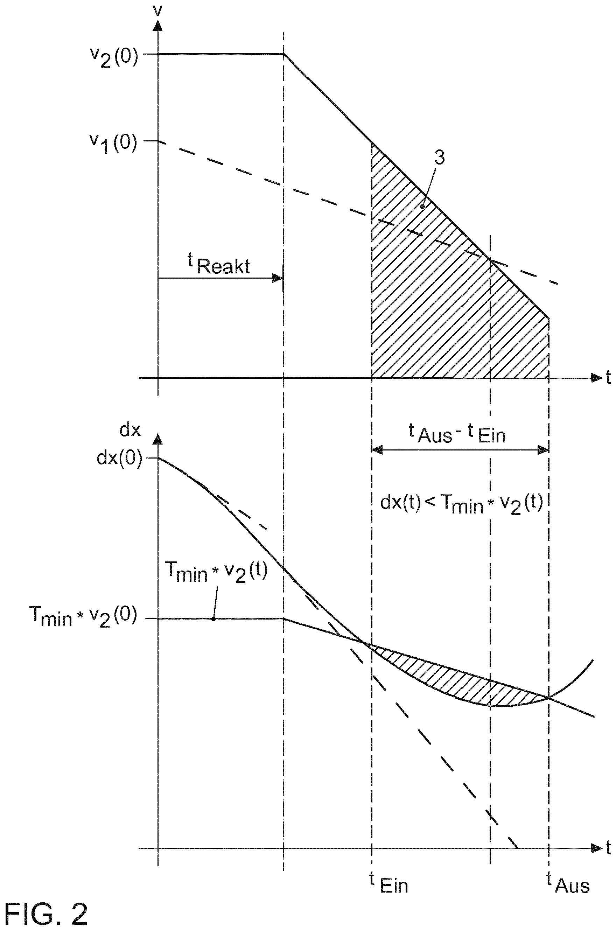

In Fig. 2 sind schematisch die in Fig. 1 dargestellten Verläufe ergänzt um eine Eintauchstrecke dargestellt, wobei das erste Fahrzeug nach der Reaktionszeit in die Eintauchstrecke eintaucht.

In Fig. 3 sind schematisch die in Fig. 1 dargestellten Verläufe ergänzt um eine Eintauchstrecke dargestellt, wobei das erste Fahrzeug vor der Reaktionszeit in die Eintauchstrecke eintaucht.

In Fig. 4 ist der Flussplan einer erfindungsgemäßen Ausführungsform zur Bestimmung eines Fahrzeugzustands dargestellt.

In Fig. 5 ist schematisch in Form eines Blockdiagramms dargestellt, wie erfindungsgemäß der Fahrzeugzustand ohne Hysterese bestimmt wird.

In Fig. 6 ist schematisch in Form eines Blockdiagramms dargestellt, wie erfindungsgemäß der Fahrzeugzustand mit Hysterese bestimmt wird.

In Figuren 7 bis 9 sind drei verschiedene Verkehrssituationen dargestellt, in welchen die vorliegende Erfindung eingesetzt werden kann.

In Fig. 10 ist ein erfindungsgemäßes Fahrzeug mit einer erfindungsgemäßen Vorrichtung schematisch dargestellt.

Im Folgenden werden die Gleichungen zur Berechnung einer Länge einer kritischen Fahrstrecke und zur Berechnung einer Fahrzeugmindestentfernung hergeleitet.

$$v_2(t) = v_2(0) \qquad\qquad t \leq t_{Reakt} \qquad\qquad (1)$$

$$v_2(t) = v_2(0) + a_2(t - t_{Reakt}) \qquad\qquad t > t_{Reakt} \qquad\qquad (2)$$

$$v_1(t) = v_1(0) + a_1 t \qquad\qquad (3)$$

Anhand der vorab stehenden Gleichungen (1) und (2) kann der Verlauf der Geschwindigkeit $v_2(t)$ des ersten Fahrzeugs über der Zeit abhängig von der aktuellen Geschwindigkeit $v_2(0)$ des ersten Fahrzeugs, von der konstanten (in der Regel negativen) Beschleunigung $a_2$ des ersten Fahrzeugs und von der Reaktionszeit $t_{Reakt}$ des Fahrers des ersten Fahrzeugs bestimmt werden. In ähnlicher Weise kann anhand der vorab stehenden Gleichung (3) der Verlauf der Geschwindigkeit $v_1(t)$ des zweiten Fahrzeugs über der Zeit abhängig von der aktuellen Geschwindigkeit $v_1(0)$ des zweiten Fahrzeugs und von der konstanten (in der Regel negativen) Beschleunigung $a_1$ des zweiten Fahrzeugs bestimmt werden.

Die folgenden Gleichungen (4) und (5) geben die Differenzgeschwindigkeit zwischen dem ersten Fahrzeug und dem zweiten Fahrzeug über der Zeit an. Dabei entspricht $dv(0)$ der Differenzgeschwindigkeit zwischen den beiden Fahrzeugen zum aktuellen Zeitpunkt.

$$dv(t) = dv(0) + a_1 t \qquad\qquad t \leq t_{\text{Reakt}} \qquad (4)$$

$$dv(t) = dv(0) + a_1 t_{\text{Re akt}} + (a_1 - a_2)(t - t_{\text{Re akt}}) \qquad t > t_{\text{Reakt}} \qquad (5)$$

Die beiden folgenden Gleichungen (6) und (7) geben den Abstand zwischen dem ersten Fahrzeug und dem zweiten Fahrzeug über der Zeit an. Dabei entspricht dx(0) dem Abstand zwischen den beiden Fahrzeugen zum aktuellen Zeitpunkt.

$$dx(t) = dx(0) + dv(0)t + \frac{a_1}{2}t^2 \qquad\qquad t \leq t_{\text{Reakt}} \qquad (6)$$

$$dx(t) = dx(0) + dv(0)t_{\text{Re akt}} + \frac{a_1}{2}t_{\text{Re akt}}{}^2 + (dv(0) + a_1 t_{\text{Re akt}})(t - t_{\text{Re akt}}) + \frac{a_1 - a_2}{2}(t - t_{\text{Re akt}})^2$$

$$t > t_{\text{Reakt}} \qquad (7)$$

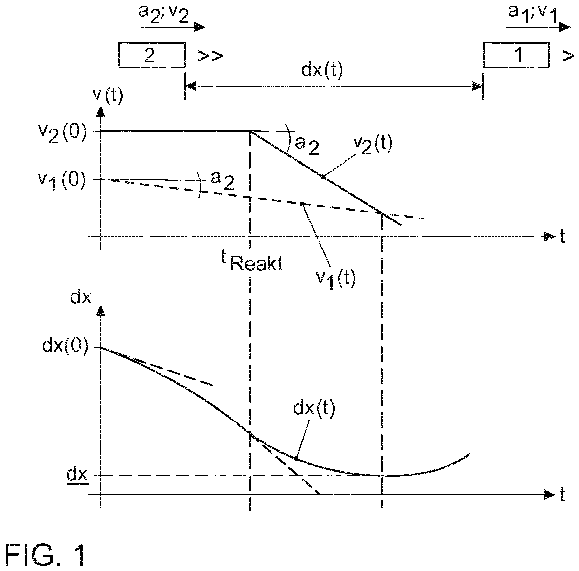

In Fig. 1 sind die Verläufe der Geschwindigkeit der beiden Fahrzeuge 1, 2 und der Verlauf des Abstands zwischen den beiden Fahrzeugen 1, 2 beispielhaft dargestellt. Die Variable $\underline{dx}$ entspricht dem minimalen Abstand zwischen den beiden Fahrzeugen 1, 2. Zur Bestimmung dieses minimalen Abstands wird die Nullstelle der ersten Ableitung der Funktion dx(t) gesucht, wie es in Gleichung (8) angegeben ist.

$$\frac{\partial dx}{\partial t}\Big|_{t > t_{\text{Re akt}}} = dv(0) + (a_1 - a_2)(t^* - t_{\text{Re akt}}) + a_1 t_{\text{Re akt}} = 0 \qquad (8)$$

Ausgehend von Gleichung (8) kommt man über die Gleichung (9) zur Gleichung (10), mit welcher der Zeitpunkt t*, zu welchem der minimale Abstand $\underline{dx}$ zwischen den beiden Fahrzeugen 1, 2 vorliegt, berechnet wird.

$$dv(0) + (a_1 - a_2)t^* + a_2 t_{\text{Re akt}} = 0 \qquad (9)$$

$$t^* = -\frac{dv(0) + a_2 t_{\text{Re akt}}}{a_1 - a_2} \qquad (10)$$

Mit Kenntnis des Zeitpunkts t* kann dann anhand der Gleichung (11) der minimale Abstand $\underline{dx}$ bestimmt werden.

$$\underline{dx} = dx(t^*) \qquad (11)$$

Setzt man den Wert für t* aus Gleichung (10) in Gleichung (7) ein, ergibt sich folgende Gleichung (12), welche über Gleichung (13) in Gleichung (14) umgeformt werden kann.

$$\underline{dx} = dx(0) + dv(0)t_{\text{Re akt}} + \frac{a_1}{2}t_{\text{Re akt}}{}^2 + (dv(0) + a_1 t_{\text{Re akt}})\left(-\frac{dv(0) + a_1 t_{\text{Re ak}}}{a_1 - a_2}\right) + \frac{a_1 - a_2}{2}\left(-\frac{dv(0) + a_1 t_{\text{Re akt}}}{a_1 - a_2}\right)^2$$

$$(12)$$

$$\underline{dx} = dx(0) + dv(0)t_{\text{Re akt}} + \frac{a_1}{a_2}t_{\text{Re akt}}{}^2 + (dv(0) + a_1 t_{\text{Re akt}})(-1)\left(\frac{dv(0) + a_1 t_{\text{Re akt}}}{a_1 - a_2}\right) + \frac{a_1 - a_2}{2}\frac{(dv(0) + a_1 t_{\text{Re akt}})^2}{(a_1 - a_2)^2}$$

$$(13)$$

$$\underline{dx} = dx(0) + dv(0)t_{\mathrm{Re}akt} + \frac{a_1}{2}t_{\mathrm{Re}akt}^2 - \frac{1}{2}\frac{\left(dv(0) + a_1 t_{\mathrm{Re}akt}\right)^2}{\left(a_1 - a_2\right)} \tag{14}$$

Mit der Gleichung (14) kann der minimale Abstand $\underline{dx}$ zwischen den Fahrzeugen 1, 2 abhängig von dem Abstand $dx(0)$ zwischen den Fahrzeugen 1, 2 zum aktuellen Zeitpunkt, abhängig von der Geschwindigkeitsdifferenz $dv(0)$ zwischen den Fahrzeugen 1, 2 zum aktuellen Zeitpunkt, abhängig von den Beschleunigungen $a_1$, $a_2$ der beiden Fahrzeuge 1, 2 und abhängig von der Reaktionszeit $t_{Reakt}$ des Fahrers des ersten Fahrzeugs 2 berechnet werden.

Im Folgenden wird eine Eintauchstrecke, welche der Länge der kritischen Fahrstrecke entspricht, berechnet. Die kritische Fahrstrecke ist dabei als diejenige Fahrstrecke definiert, auf welcher das erste Fahrzeug 2 mit einem Abstand hinter dem zweiten Fahrzeug 1 herfährt, welcher unterhalb des von der Geschwindigkeit $v_2(t)$ des ersten Fahrzeugs 2 abhängigen Mindestabstands zum zweiten Fahrzeug 1 liegt. Die Eintauchstrecke bzw. die Länge der kritischen Fahrstrecke definiert demnach, wie lang das erste Fahrzeug 2 in den geschwindigkeitsabhängigen Mindestabstand zum zweiten Fahrzeug 1 eintaucht. Zur Berechnung der Eintauchstrecke werden die beiden Zeitpunkte, zu welchen das erste Fahrzeug 2 in die Eintauchstrecke eintaucht und aus der Eintauchstrecke austaucht, durch folgende Gleichung (15) berechnet und dann ausgehend von diesen beiden Zeitpunkten die Eintauchstrecke selbst berechnet.

$$dx(t) = T_{\min} v_2(t) \tag{15}$$

Unter der Annahme, dass der Eintauchzeitpunkt erst nach Ablauf der Reaktionszeit vorliegt, ergibt sich anhand der Gleichungen (2) und (7) ($t > t_{Reakt}$) die folgende Gleichung (16).

$$dx(0) + dv(0)t_{\mathrm{Re}akt} + \frac{a_1}{2}t_{\mathrm{Re}akt}^2 + (dv(0) + a_1 t_{\mathrm{Re}akt})(t - t_{\mathrm{Re}akt}) + \frac{a_1 - a_2}{2}(t - t_{\mathrm{Re}akt})^2 = [v_2(0) + a_2(t - t_{\mathrm{Re}akt})]T_{\min} \tag{16}$$

Mit den folgenden Konstanten c1 und c2 gemäß der Gleichungen (G6) und (G7) sowie der neu eingeführten Variablen $\tilde{t}$ gemäß Gleichung (17) ergibt sich Gleichung (18).

$$c_1 := dx(0) + dv(0)t_{\mathrm{Re}akt} + \frac{a_1}{2}t_{\mathrm{Re}akt}^2 \qquad [\text{s}] \tag{G7}$$

$$c_2 := v_2(0)T_{\min} \qquad [\text{s}] \tag{G6}$$

$$\tilde{t} := t - t_{\mathrm{Re}akt} \qquad [\text{t}] \tag{17}$$

$$c1 + (dv(0) + a_1 t_{\mathrm{Re}akt})\tilde{t} + \frac{a_1 - a_2}{2}\tilde{t}^2 = c_2 + a_2 T_{\min}\tilde{t} \tag{18}$$

Über die in Gleichungen (19) und (20) angegebenen Umformung ergibt sich schließlich die Gleichung (21) zur Bestimmung des Eintauch-Zeitpunkts $\tilde{t}_{Ein}$ und des Austauch-Zeitpunkts $\tilde{t}_{Aus}$.

Dabei gilt das Minuszeichen vor der Wurzel für den Eintauch-Zeitpunkt $\tilde{t}_{Ein}$ und das Pluszeichen für den Austauch-Zeitpunkt $\tilde{t}_{Aus}$.

$$\frac{a_1 - a_2}{2}\tilde{t}^2 + (dv(0) + a_1 t_{\mathrm{Re}akt} - a_2 T_{\min})\tilde{t} + (c_1 - c_2) = 0 \tag{19}$$

$$\widetilde{t}^{\,2} + \left(2\frac{dv(0)+a_1 t_{Reakt}-a_2 T_{\min}}{a_1-a_2}\right)\widetilde{t} + \left(2\frac{c_1-c_2}{a_1-a_2}\right) = 0 \qquad (20)$$

$$\widetilde{t}_{Ein,Aus} = -\frac{dv(0)+a_1 t_{Reakt}-a_2 T_{\min}}{a_1-a_2} \pm \sqrt{\left(\frac{dv(0)+a_1 t_{Reakt}-a_2 T_{\min}}{a_1-a_2}\right)^2 - 2\frac{c_1-c_2}{a_1-a_2}} \qquad (21)$$

Mit der Konstanten c3 gemäß der Gleichung (G5) kann die Gleichung (21) in die Gleichung (22) überführt werden.

$$c_3 := -\left(dv(0)+a_1 t_{Reakt}-a_2 T_{\min}\right) \qquad [\text{v}] \qquad (G5)$$

$$\widetilde{t}_{Ein,Aus} = \frac{c_3}{a_1-a_2} \pm \sqrt{\left(\frac{c_3}{a_1-a_2}\right)^2 - 2\frac{c_1-c_2}{a_1-a_2}} \qquad (22)$$

Die Eintauchstrecke et kann nun anhand der Gleichung (23) berechnet werden.

$$et = x_2(t_{Aus}) - x_2(t_{Ein}) \qquad (23)$$

Über die Beziehung (24) kann die Gleichung (23) in die Gleichung (25) überführt werden, welche über die Gleichungen (26) und (27) in die Gleichung (28) umgeformt werden kann.

$$\widetilde{t} = t - t_{Reakt} \Leftrightarrow t = \widetilde{t} + t_{Reakt} \qquad (24)$$

$$et = x_2(\widetilde{t}_{Aus} + t_{Reakt}) - x_2(\widetilde{t}_{Ein} + t_{Reakt}) \qquad (25)$$

$$et = v_2(0)\widetilde{t}_{Aus} + \frac{a_2}{2}(\widetilde{t}_{Aus} + t_{Reakt})^2 - v_2(0)\widetilde{t}_{Aus} - \frac{a_2}{2}(\widetilde{t}_{Ein} + t_{Reakt})^2 \qquad (26)$$

$$et = v_2(0)(\widetilde{t}_{Aus} - \widetilde{t}_{Ein}) + \frac{a_2}{2}(\widetilde{t}_{Aus}^{\,2} + 2\widetilde{t}_{Aus}t_{Reakt} - \widetilde{t}_{Ein}^{\,2} - 2\widetilde{t}_{Ein}t_{Reakt}) \qquad (27)$$

$$et = v_2(0)(\widetilde{t}_{Aus} - \widetilde{t}_{Ein}) + \frac{a_2}{2}(\widetilde{t}_{Aus}^{\,2} - \widetilde{t}_{Ein}^{\,2} + 2t_{Reakt}(\widetilde{t}_{Aus} - \widetilde{t}_{Ein})) \qquad (28)$$

Der Eintauch-Zeitpunkt und der Austauch-Zeitpunkt können anhand der Konstanten c4 und c5 (siehe Gleichungen (G3) und (G4)) ausgedrückt werden, wie es in Gleichungen (29) und (30) angegeben ist.

$$c_4 = \frac{c_3}{a_1-a_2} \qquad [\text{t}] \qquad (G4)$$

$$c_5 = \sqrt{c_4^{\,2} - 2\frac{c_1-c_2}{a_1-a_2}} \qquad [\text{t}] \qquad (G3)$$

$$\tilde{t}_{Aus} = c_4 + c_5 \tag{29}$$

$$\tilde{t}_{Ein} = c_4 - c_5 \tag{30}$$

Anhand der Gleichungen (29) und (30) kann die Gleichung (28) in die Gleichung (31) umgeformt werden.

$$et = v_2(0)\left(c_4 + c_5 - c_4 + c_5\right) + \frac{a_2}{2}\left(2c_4c_5 + 2c_4c_5 + 2t_{Reakt} - 2c_5\right) \tag{31}$$

Anhand der in den Gleichungen (32) bis (34) angegebenen Umformungen, kann die Gleichung (31) schließlich in die Gleichung (G1) überführt werden

$$et = v_2(0)2c_5 + \frac{a_2}{2}\left(4c_4c_5 + 4t_{Reakt}c_5\right) \tag{32}$$

$$et = 2v_2(0)c_5 + 2a_2c_4c_5 + 2a_2t_{Reakt}c_5 \tag{33}$$

$$et = 2c_5\left(v_2(0) + a_2\left(c_4 + t_{Reakt}\right)\right) \tag{34}$$

$$et = 2c_5\left[v_2(0) + a_2\left(c_4 + t_{Reakt}\right)\right] \tag{G1}$$

Die Gleichung (G1) kann in folgende Gleichung (35) überführt werden, welche dann anhand der Definition der Konstante c5 gemäß der Gleichung (G3) in die Gleichung (36) und schließlich in die Gleichung (37) überführt werden kann.

$$c_5^{\ 2} = \left(\frac{et}{2\left[v_2(0) + a_2\left(c_4 + t_{Reakt}\right)\right]}\right)^2 \tag{35}$$

$$c_4^{\ 2} - 2\frac{c_1 - c_2}{a_1 - a_2} = \frac{et^2}{4\left[v_2(0) + a_2\left(c_4 + t_{Reakt}\right)\right]^2} \tag{36}$$

$$c_1 = \frac{a_1 - a_2}{2}\left[c_4^{\ 2} - \frac{et^2}{4\left[v_2(0) + a_2\left(c_4 + t_{Reakt}\right)\right]^2}\right] + c_2 \tag{37}$$

Anhand der Definition der Konstante c1 gemäß Gleichung (G7) kann die Gleichung (37) in die Gleichung (G8) überführt werden.

$$dx(0) = \frac{a_1 - a_2}{2}\left[c_4^{\ 2} + \frac{et^2}{4\left[v_2(0) + a_2\left(c_4 + t_{Reakt}\right)\right]^2}\right] + c_2 - dv(0)t_{Reakt} - \frac{a_1}{2}t_{Reakt}^{\ 2} \tag{G8}$$

dx(0) entspricht gemäß Gleichung (G8) einer Fahrzeugmindestentfernung zwischen dem ersten Fahrzeug 2 und dem zweiten Fahrzeug 1. Diese Fahrzeugmindestentfernung muss zum aktuellen Zeitpunkt (t=0) mindestens vorliegen, damit bei einer um die Reaktionszeit $t_{Reakt}$ verzögerten Beschleunigung bzw. Verzögerung $a_2$ des ersten Fahrzeugs 2 als Reaktion auf eine Beschleunigung bzw. Verzögerung $a_1$ des vorausfahrenden zweiten Fahrzeugs 1 das erste Fahrzeug 2 den geschwindigkeitsabhängigen Sicherheitsabstand, welcher mittels der Zeitlücke $T_{min}$ bestimmt wird, nur über eine Strecke von höchstens der Länge et unterschreitet.

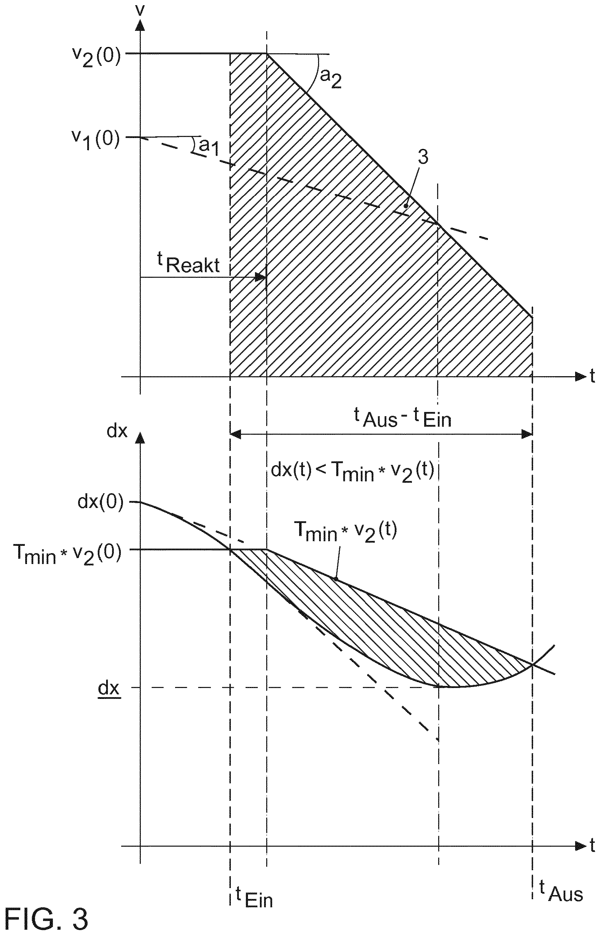

Mit Hilfe der in Fig. 3 dargestellten Verläufe für die Geschwindigkeit $v_1(t)$, $v_2(t)$ der beiden Fahrzeuge 1, 2 und dem Verlauf des Abstands dx(t) zwischen den beiden Fahrzeugen 1, 2 wird nun die Eintauchstrecke et bzw. die Länge der kritischen Fahrstrecke für den Fall hergeleitet, dass der Eintauch-Zeitpunkt $t_{Ein}$ vor Ablauf der Reaktionszeit $t_{Reakt}$ liegt. In diesem Fall wird die Eintauchstrecke et anhand von zwei Integralen des Geschwindigkeitsverlaufs $v_2(t)$ des ersten Fahrzeugs 2 berechnet, wie es in Gleichung (38) angegeben ist.

$$et = \int_{t_{Ein}}^{t_{Re\,akt}} v_2(0)\,dt + \int_{t_{Re\,akt}}^{t_{Aus}} v_2(0) + a_2\left(t - t_{Re\,akt}\right)dt \qquad (38)$$

Diese Gleichung (38) kann in die Gleichung (39) überführt werden, welche wiederum anhand der Beziehung (24) in die Gleichung (40) überführt werden kann, welche wiederum anhand der Gleichungen (29) und (30) in die Gleichung (41) überführt werden kann.

$$et = v_2(0)\left(t_{Re\,akt} - t_{Ein}\right) + v_2(0)\left(t_{Aus} - t_{Ein}\right) + \frac{a_2}{2}\left(t_{Aus} - t_{Re\,akt}\right)^2 \qquad (39)$$

$$et = v_2(0)\left(\widetilde{t}_{Aus} - 2\widetilde{t}_{Ein}\right) + \frac{a_2}{2}\widetilde{t}_{Aus}^{\ 2} \qquad (40)$$

$$et = v_2(0)\left(c_4 + c_5 - 2(c_4 - c_5)\right) + \frac{a_2}{2}\left(c_4 + c_5\right)^2 \qquad (41)$$

Die Gleichung (41) kann schließlich über die Gleichung (42) in die Gleichung (G2) überführt werden.

$$et = v_2(0)\left(3c_5 - c_4\right) + \frac{a_2}{2}\left(c_4 + c_5\right)^2 \qquad (42)$$

$$et = \left(3c_5 - c_4\right)v_2(0) + \frac{a_2}{2}\left(c_4 + c_5\right)^2 \qquad (G2)$$

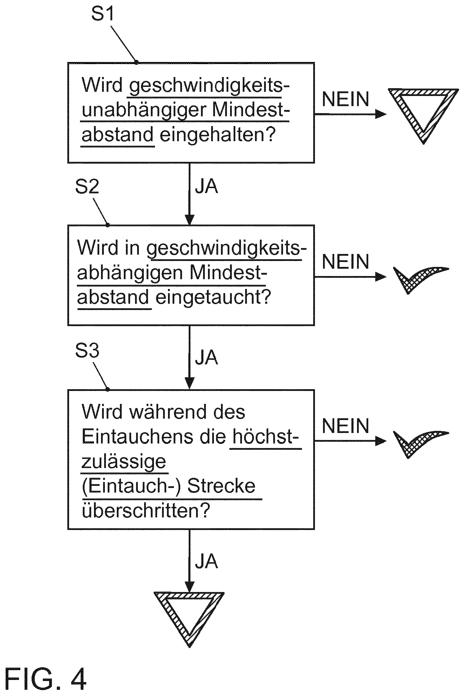

In Fig. 4 ist der Flussplan einer erfindungsgemäßen Ausführungsform zur Bestimmung eines Fahrzeugzustands dargestellt.

Im ersten Schritt S1 wird beispielsweise anhand der vorab stehenden Gleichung (14) überprüft, ob ein von der Geschwindigkeit des ersten Fahrzeugs 2 unabhängiger Mindestabstand (z.B. 10 m) eingehalten wird. Wenn dies nicht der Fall ist, wird der Fahrzeugzustand auf kritisch gesetzt. Wenn der geschwindigkeitsunabhängige Mindestabstand eingehalten wird, kommt das Verfahren zum zweiten Schritt S2, in welchem überprüft wird, ob in den geschwindigkeitsabhängigen Mindestabstand eingetaucht wird. Dies ist beispielsweise der Fall, wenn der Radikand unter der Wurzel in Gleichung (21) oder (22) positiv ist, wenn also der Radikand R gemäß der folgenden Gleichung (43) größer als Null ist.

$$R = \left(\frac{c_3}{a_1 - a_2}\right)^2 - 2\frac{c_1 - c_2}{a_1 - a_2} \qquad (43)$$

Wenn nicht in den geschwindigkeitsabhängigen Mindestabstand eingetaucht wird ($R \leq 0$), wird der Fahrzeugzustand nicht als kritisch bestimmt und das Verfahren endet. Wenn dagegen in den geschwindigkeitsabhängigen Mindestabstand eingetaucht wird ($R > 0$), wird im nächsten Schritt S3 überprüft, ob die Eintauchstrecke länger als ein vorbestimmter Längenschwellenwert (d.h. eine höchstzulässige Eintauchstrecke) ist. Falls dies der Fall ist, wird der Fahrzeugzustand auf kritisch gesetzt.

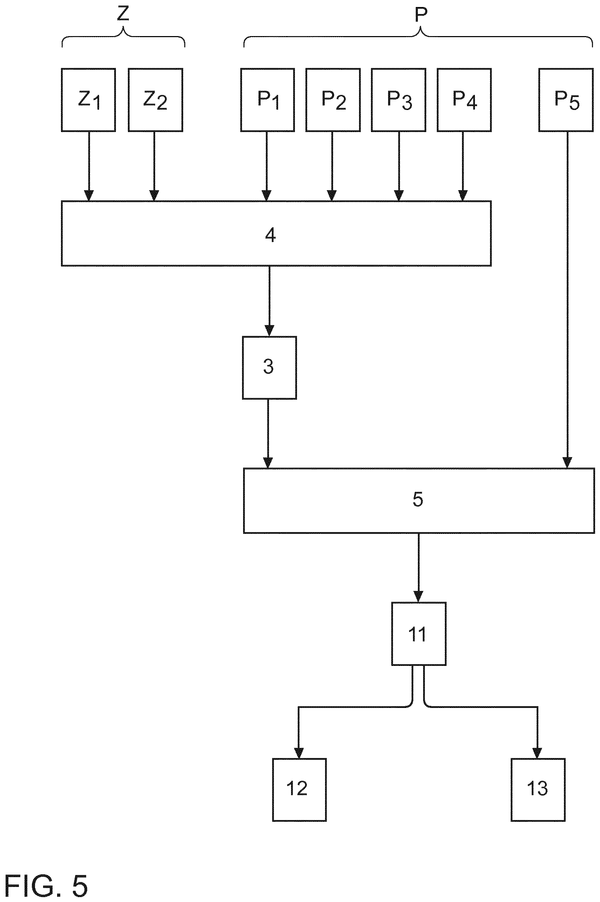

In Fig. 5 wird das erfindungsgemäße Verfahren zur Bestimmung des Fahrzeugzustands schematisch dargestellt.

Die Bestimmung des Fahrzeugzustands erfolgt ausgehend von Zustandsgrößen Z einer aktuellen Situation, wie einem aktuellen Abstand dx(0) bzw. Z, der beiden Fahrzeuge 1, 2 sowie den aktuellen Geschwindigkeiten $Z_2$ bzw. $v_1(0)$, $v_2(0)$ der beiden Fahrzeuge 1, 2, wie sie anhand von Sensoren, beispielsweise Radsensoren oder Lasern, gemessen werden. Daneben wird die Bestimmung des Fahrzeugzustands durch einen Parametersatz P parametriert. Dieser Parametersatz P umfasst den geschwindigkeitsunabhängigen Mindestabstand $P_1$, den geschwindigkeitsabhängigen Mindestabstand $P_2$, welcher z. B. durch die Zeitlücke $T_{min}$ definiert wird, Beschleunigungen P3 bzw. $a_1$, $a_2$ der beiden Fahrzeuge 1, 2, die Reaktionszeit $P_4$ bzw. $t_{Reakt}$ und die höchstzulässige Eintauchstrecke $P_5$ bzw. den vorbestimmten Längenschwellenwert. Anhand einer Berechnung 4 wird eine erwartete Eintauchstrecke 3 berechnet, welche durch eine Auswertung 5 mit der höchstzulässigen Eintauchstrecke P5 verglichen wird. Das Ergebnis dieses Vergleichs ist ein binäres Kritikalitätsmaß 11, d.h. der Fahrzeugzustand, welche entweder als kritisch oder als nicht kritisch eingestuft wird. Dieser Fahrzeugzustand 11 wird entweder zur Ausgabe einer Auffahrwarnung 12 für das Fahrzeug und/oder zur Beurteilung einer Spurwechselmöglichkeit des Fahrzeugs einem Spurwechselassistenzsystem 13 des Fahrzeugs zugeführt.

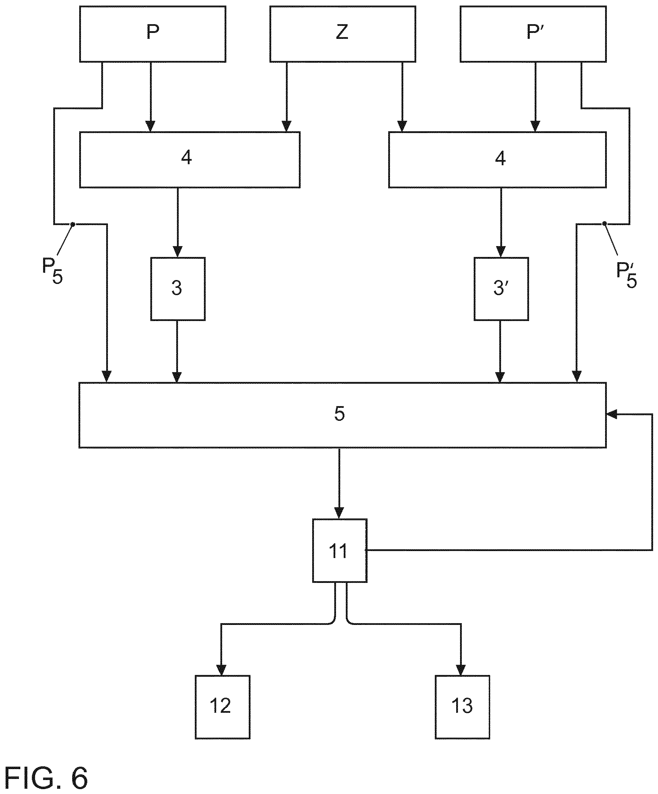

In Fig. 6 ist eine erfindungsgemäße Variante der in Fig. 5 dargestellten Bestimmung des Fahrzeugzustands dargestellt, bei welcher das Verfahren mit einer Hysterese versehen ist, um die Bestimmung des Fahrzeugzustands von einer möglichen Sprunghaftigkeit zu befreien.

Während bei der in Fig. 6 beschriebenen Variante dieselben Zustandsgrößen Z wie bei der in Fig. 5 dargestellten Bestimmung eingesetzt werden, arbeitet die in Fig. 6 dargestellte Variante mit zwei verschiedenen Parametersätzen P, P'. Dadurch werden trotz des identischen Berechnungsverfahrens 4 zwei verschiedene erwartete Eintauchstrecken 3, 3' abhängig von dem jeweiligen Parametersatz P bzw. P' berechnet. Diese beiden erwarteten Eintauchstrecken 3, 3' werden in der Auswertung 5 jeweils mit der zugehörigen höchstzulässigen Eintauchstrecke $P_5$, $P'_5$ verglichen.

Dabei weist die Auswertung 5 nun eine Hysterese auf. Wenn der Fahrzeugzustand 11 bisher als nicht kritisch eingestuft wird, arbeitet die Auswertung 5 mit der erwarteten Eintauchstrecke 3, welche durch den normalen Parametersatz P bestimmt wird. Wenn der Fahrzeugzustand 11 allerdings als kritisch bestimmt wurde, arbeitet die Auswertung mit der erwarteten Eintauchstrecke 3', welche durch den anderen Parametersatz P' bestimmt wird. Dabei ist der andere Parametersatz P' im Vergleich zu dem normalen Parametersatz P derart gewählt, dass der Fahrzeugzustand bei denselben Zustandsgrößen durch den anderen Parametersatz P' immer als kritisch eingestuft wird, wenn er durch den normalen Parametersatz P als kritisch eingestuft wird. Dagegen kann der Fall auftreten, dass der Fahrzeugzustand bei denselben Zustandsgrößen durch den anderen Parametersatz P' als kritisch eingestuft wird, während der Fahrzeugzustand durch den normalen Parametersatz P als nicht kritisch bestimmt wird. Damit ist vorteilhafterweise sichergestellt, dass der Fahrzeugzustand nur dann von kritisch auf unkritisch zurückgesetzt wird, wenn sich die Zustandsgrößen merklich verbessert haben.

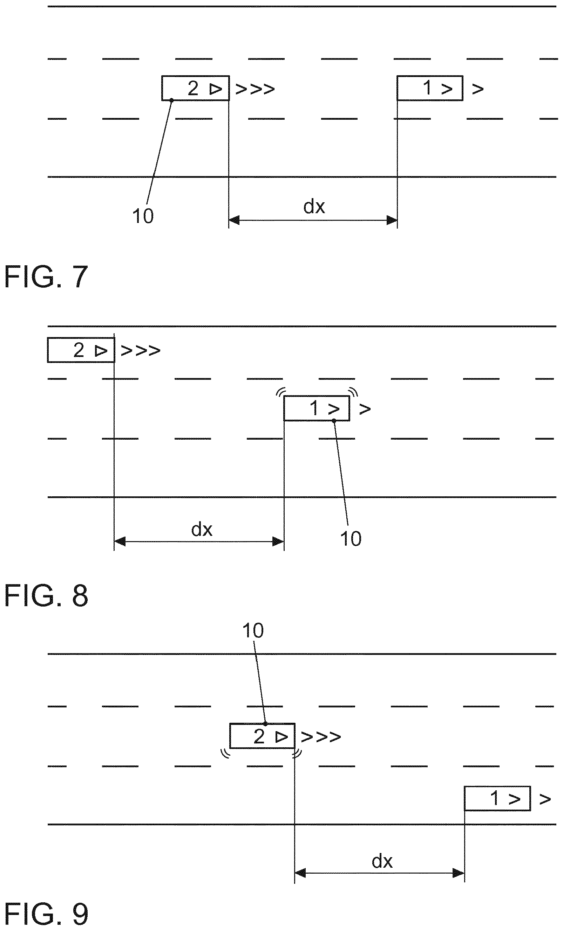

In Figuren 7 bis 9 werden verschiedene Ausführungsformen dargestellt, mit welchen ein Fahrer eines Fahrzeugs durch die vorliegende Erfindung unterstützt werden kann.

In Fig. 7 handelt es sich bei dem erfindungsgemäßen Fahrzeug 10, welches durch die vorliegende Erfindung unterstützt wird, um das erste Fahrzeug 2, welches auf derselben Fahrbahn hinter dem zweiten Fahrzeug 1 her fährt. Durch die erfindungsgemäße Bestimmung des Fahrzeugzustands und somit durch die erfindungsgemäße Bestimmung der Länge der kritischen Fahrstrecke (d.h. der Eintauchstrecke) kann der Fahrer des Fahrzeugs 10 in diesem Fall entsprechend vor einem zu langen Unterschreiten des geschwindigkeitsabhängigen Mindestabstands gewarnt werden, wenn sich der Fahrer einem langsameren Fahrzeug 1 in der eigenen Fahrspur annähert.

In Fig. 8 handelt es sich bei dem erfindungsgemäßen Fahrzeug 10, welches durch die vorliegende Erfindung unterstützt wird, um das zweite Fahrzeug 1, welches auf die benachbarte Fahrspur des ersten Fahrzeugs 2 wechseln möchte. In diesem Fall wird der Fahrzeugzustand anhand der Länge der kritischen Fahrstrecke des ersten Fahrzeugs 2 bestimmt, welches hinter dem Fahrzeug 10 fährt. Dieser Fall ist beispielsweise für einen Spurwechselassistent des Fahrzeugs 10 geeignet, wenn sich ein schnelleres Fahrzeug 2 auf dem benachbarten Fahrstreifen, auf den gewechselt werden soll, von hinten annähert.

Dagegen handelt es sich in Fig. 9 bei dem erfindungsgemäßen Fahrzeug 10, welches durch die vorliegende Erfindung unterstützt wird, um das erste Fahrzeug 2, welches auf die benachbarte Fahrspur des zweiten Fahrzeugs 1 wechseln möchte. In diesem Fall wird der Fahrzeugzustand ebenfalls anhand der Länge der kritischen Fahrstrecke des ersten Fahrzeugs 2 bestimmt, welches allerdings in diesem Fall das erfindungsgemäße Fahrzeug 10 ist. Dieser Fall ist beispielsweise für einen Spurwechselassistent des Fahrzeugs 10 geeignet, wenn ein langsameres Fahrzeug 1 auf dem benachbarten Fahrstreifen, auf welchen gewechselt werden soll, vorausfährt.

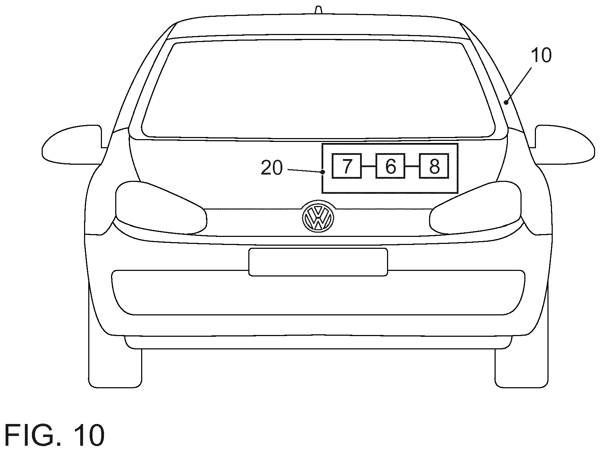

In Fig. 10 ist schematisch ein erfindungsgemäßes Fahrzeug 10 dargestellt, welches eine erfindungsgemäße Vorrichtung 20 umfasst. Die erfindungsgemäße Vorrichtung 20 umfasst ihrerseits neben einer Steuerung 6 einen Sensor 7 und eine Warneinrichtung 8.

Anhand der erfindungsgemäßen Vorrichtung 20 soll nochmals ein erfindungsgemäßes Vorgehen im Detail erläutert werden.

Mit Hilfe des Sensors 7 wird zu einem bestimmten Zeitpunkt der aktuelle Abstand dx(0) und die Relativgeschwindigkeit dv(0) zwischen dem vorausfahrenden Fahrzeug 1 und dem folgenden Fahrzeug 2 erfasst. Die beiden Fahrzeuge 1, 2 befinden sich auf derselben Fahrspur (siehe Fig. 7) oder auf benachbarten Fahrspuren (siehe Fig. 8 oder Fig. 9). Nur wenn sich der Abstand dx(t) der Fahrzeuge verringert (d.h. nur wenn die Relativgeschwindigkeit dv(t) negativ ist), wird das Vorgehen fortgeführt.

Es wird überprüft, ob im zeitlichen Verlauf der geschwindigkeitsunabhängige Mindestabstand zwischen den Fahrzeugen 1, 2 unterschritten wird. Wenn der ermittelte minimale Abstand dx zwischen den beiden Fahrzeugen 1, 2 unterhalb des geforderten geschwindigkeitsunabhängigen Mindestabstands liegt, wird der Fahrzeugzustand auf kritisch gesetzt. Das Vorgehen wird fortgeführt, wenn der Fahrzeugzustand bisher nicht als kritisch bestimmt wurde.

Es wird überprüft, ob im zeitlichen Verlauf der geschwindigkeitsabhängige Mindestabstand zwischen den Fahrzeugen 1, 2 irgendwann unterschritten wird. Wenn dies nicht der Fall ist, wird der Fahrzeugzustand auf nicht kritisch gesetzt. Nur im anderen Fall wird das Vorgehen fortgeführt.

Die im eingetauchten Zustand zurückgelegte Strecke (d.h. die so genannte Eintauchstrecke) wird bestimmt und mit einer vorgegebenen, höchstzulässigen Eintauchstrecke (z.B. 250 m) verglichen. Wenn die Eintauchstrecke länger als die höchstzulässige Eintauchstrecke ist, wird der Fahrzeugzustand auf kritisch gesetzt und sonst auf nicht kritisch gesetzt.

Bei der Bestimmung der Eintauchstrecke wird insbesondere angenommen, dass das vorausfahrende Fahrzeug 1 und das folgende Fahrzeug 2 jeweils mit einer konstanten Beschleunigung $a_1$ bzw. $a_2$ beschleunigen bzw. verzögern. Beispielsweise kann die Beschleunigung des vorausfahrenden Fahrzeugs $a_1 = -1$ m/s$^2$ und die Beschleunigung des nachfolgenden Fahrzeugs 2 kann $a_2 = -3,5$ m/s$^2$ betragen. D.h. das vorausfahrende Fahrzeug 1 verzögert leicht und das nachfolgende Fahrzeug 2 verzögert mit seiner maximalen ACC-Verzögerung (ACC, "Automatic Cruise Control"), so dass durch die vorliegende Erfindung eine frühe Auffahrwarnung für ein mittels ACC geregeltes Fahrzeug realisiert werden kann.

Bei einem anderen Beispiel beträgt $a_1 = 0$ m/s$_2$ (d.h. das vorausfahrende Fahrzeug 1 beschleunigt und bremst nicht) und $a_2 = -2$ m/s$^2$ (d.h. das nachfolgende Fahrzeug 2 verzögert moderat). In diesem Fall kann durch die vorliegende Erfindung eine Beurteilung erfolgen, ob das vorausfahrende Fahrzeug 1 vor das nachfolgende Fahrzeug 2 einfädeln kann, ohne dass das nachfolgende Fahrzeug 2 (über Gebühr) verzögern müsste.

Bei einem anderen Beispiel beträgt $a_1 = -5$ m/s$^2$ (d.h. das vorausfahrende Fahrzeug 1 verzögert stark) und $a_2 = -8$ m/s$^2$ (d.h. das nachfolgende Fahrzeug verzögert beinah maximal). In diesem Fall kann durch die vorliegende Erfindung eine Warnung an den Fahrer des folgenden Fahrzeugs 2 ausgegeben werden, da dieser bei deutlicher Verzögerung des vorausfahrenden Fahrzeugs 1 voll verzögern müsste, um nicht zu kollidieren und den geschwindigkeitsabhängigen Abstand nur vorübergehend zu unterschreiten.

**Bezugszeichenliste**

| 1 | vorher-fahrendes Fahrzeug |
|---|---|
| 2 | nach-fahrendes Fahrzeug |
| 3, 3' | Eintauchstrecke |
| 4 | Berechnung |
| 5 | Auswertung |
| 6 | Steuerung |
| 7 | Sensor |
| 8 | Warneinrichtung |
| 10 | Ego-Fahrzeug |
| 11 | Kritikalitätsmaß bzw. kritischer oder unkritischer Zustand des Fahrzeugs |
| 12 | Auffahrwarnung |
| 13 | Spurwechselassistenzsystem |
| $a_1$ | Beschleunigung des ersten Fahrzeugs |
| $a_2$ | Beschleunigung des zweiten Fahrzeugs |
| dx | Abstand zwischen erstem und zweitem Fahrzeug |
| $P_*$ | Parameter |
| P, P' | Parametersatz |
| $P_5$, $P'_5$ | höchstzulässige Eintauchstrecke |
| S1-S3 | Verfahrensschritt |
| t | Zeit |

$t_{Ein}$      Zeitpunkt, zu dem der geschwindigkeitsabhängige Mindestabstand erstmals unterschritten wird

$t_{Aus}$      Zeitpunkt, zu dem der geschwindigkeitsabhängige Mindestabstand erstmals nicht mehr unterschritten wird

$t_{Reakt}$    Reaktionszeit

$T_{min}$     Zeitlücke zur Berechnung des geschwindigkeitsabhängigen Mindestabstands

$v_1$       Geschwindigkeit des ersten Fahrzeugs

$v_2$       Geschwindigkeit des zweiten Fahrzeugs

$Z_*$       Zustand bzw. Zustandsgröße des Fahrzeugs

**Patentansprüche**

1. Verfahren zum Bestimmen eines Fahrzeugzustands (11) mittels einer Vorrichtung (20), die Sensormittel (7) und Steuermittel (6) umfasst, wobei das Verfahren folgende Schritte umfasst:

   Erfassen eines aktuellen Abstands (dx(0)) zwischen einem ersten Fahrzeug (2) und einem vor dem ersten Fahrzeug (2) fahrenden zweiten Fahrzeug (1), einer aktuellen Geschwindigkeit ($v_2$(0)) des ersten Fahrzeugs (2) und einer aktuellen Geschwindigkeit ($v_1$(0)) des zweiten Fahrzeugs (1) durch die Sensormittel (7),
   Bestimmen einer Länge einer kritischen Fahrstrecke eines ersten Fahrzeugs (2) durch die Steuermittel (6), wobei die kritische Fahrstrecke so definiert ist, dass das auf der kritischen Fahrstrecke fahrende erste Fahrzeug (2) nur auf der gesamten kritischen Fahrstrecke einen von einer Geschwindigkeit ($v_2$) des ersten Fahrzeugs (2) abhängigen Mindestabstand zu einem vor dem ersten Fahrzeug (2) fahrenden zweiten Fahrzeug (1) unterschreitet,
   Bestimmen des Fahrzeugzustands (11) als kritisch durch die Steuermittel (6), wenn die Länge länger als ein vorbestimmter Längenschwellenwert ($P_5$; $P'_5$) ist.

2. Verfahren nach Anspruch 1,
   **dadurch gekennzeichnet,**

   **dass** die Länge der kritischen Fahrstrecke abhängig von mindestens einem Parameter aus einer Parametergruppe bestimmt wird, und
   **dass** die Parametergruppe umfasst:

   • eine Beschleunigung ($a_1$) des zweiten Fahrzeugs (1),
   • eine Beschleunigung ($a_2$) des ersten Fahrzeugs (2),
   • eine Reaktionszeit ($t_{Reakt}$) eines Fahrers des ersten Fahrzeugs (2),
   • eine aktuelle Geschwindigkeit ($v_1$(0)) des zweiten Fahrzeugs (1),
   • eine Zeitspanne ($T_{min}$) zur Berechnung des geschwindigkeitsabhängigen Mindestabstands zwischen den Fahrzeugen (1, 2),
   • eine aktuelle Geschwindigkeit ($v_2$(0)) des ersten Fahrzeugs (2), und
   • ein aktueller Abstand (dx(0)) zwischen dem ersten Fahrzeug (2) und dem zweiten Fahrzeug (1).

3. Verfahren nach Anspruch 2,
   **dadurch gekennzeichnet,**

   **dass** die Länge et der kritischen Fahrstrecke gemäß der folgenden Gleichung (G1) berechnet wird, wenn das erste Fahrzeug (2) die kritische Fahrstrecke nicht vor der Reaktionszeit $t_{Reakt}$ erreicht,

$$et = 2c_5 \left[ v_2(0) + a_2 \left( c_4 + t_{Reakt} \right) \right], \qquad \text{(G1)}$$

   und
   **dass** die Länge et der kritischen Fahrstrecke gemäß der folgenden Gleichung (G2) berechnet wird, wenn das erste Fahrzeug (2) die kritische Fahrstrecke vor der Reaktionszeit $t_{Reakt}$ erreicht

$$et = \left( 3c_5 - c_4 \right) v_2(0) + \frac{a_2}{2} \left( c_4 + c_5 \right)^2 \qquad \text{(G2),}$$

wobei

$$c_5 = \sqrt{c_4{}^2 - 2\frac{c_1 - c_2}{a_1 - a_2}} \quad \text{(G3)},$$

$$c_4 = \frac{c_3}{a_1 - a_2} \quad \text{(G4)},$$

$$c_3 := -\left(dv(0) + a_1 t_{\mathrm{Re}\,akt} - a_2 T_{\min}\right) \quad \text{(G5)},$$

$$c_2 := v_2(0)T_{\min} \quad \text{(G6)},$$

und

$$c_1 := dx(0) + dv(0)t_{\mathrm{Re}\,akt} + \frac{a_1}{2}t_{\mathrm{Re}\,akt}{}^2 \quad \text{(G7) gilt},$$

gilt,

wobei $a_1$ der Beschleunigung des zweiten Fahrzeugs (1), $a_2$ der Beschleunigung des ersten Fahrzeugs (2), $t_{\mathrm{Reakt}}$ der Reaktionszeit des Fahrers des ersten Fahrzeugs (2), $T_{\min}$ einer Zeitspanne zur Berechnung des geschwindigkeitsabhängigen Mindestabstands, $dv(0)$ einer aktuellen Geschwindigkeitsdifferenz zwischen der Geschwindigkeit $v_2(0)$ des ersten Fahrzeugs (2) und der Geschwindigkeit $v_1(0)$ des zweiten Fahrzeugs (1), und $dx(0)$ einem aktuellen Abstand zwischen dem ersten Fahrzeug (2) und dem zweiten Fahrzeug (1) entspricht.

4. Verfahren nach einem der vorhergehenden Ansprüche,
**dadurch gekennzeichnet,**

**dass**, wenn der Fahrzeugzustand (11) abhängig von einem Parametersatz (P) als kritisch bestimmt worden ist, ein weiterer Fahrzeugzustand mit dem Verfahren nach einem der vorhergehenden Ansprüche abhängig von einem weiteren Parametersatz (P') bestimmt wird,
**dass** der Parametersatz (P) und der weitere Parametersatz (P') zumindest einen Parameter aus einer weiteren Parametergruppe umfassen, wobei die weitere Parametergruppe umfasst:

- eine Beschleunigung ($a_1$) des zweiten Fahrzeugs (1),
- eine Beschleunigung ($a_2$) des ersten Fahrzeugs (2), und
- eine Reaktionszeit ($t_{\mathrm{Reakt}}$) eines Fahrers des ersten Fahrzeugs (2),
- eine Zeitspanne ($T_{\min}$) zur Berechnung des geschwindigkeitsabhängigen Mindestabstands zwischen den Fahrzeugen (1, 2), und
- der vorbestimmte Längenschwellenwert,

**dass** der Parametersatz (P) im Vergleich zu dem weiteren Parametersatz (P') so gewählt wird, dass unter gleichen Ausgangsbedingungen der weitere Fahrzeugzustand durch das Verfahren nach einem der vorhergehenden Ansprüche abhängig von dem weiteren Parametersatz (P') immer als kritisch bestimmt wird, wenn der Fahrzeugzustand durch das Verfahren nach einem der vorhergehenden Ansprüche abhängig von dem Parametersatz (P) ebenfalls als kritisch bestimmt wird, und
**dass** der Fahrzeugzustand (11) nur auf nicht kritisch zurückgesetzt wird, wenn der weitere Fahrzeugzustand nicht als kritisch bestimmt wird.

**5.** Vorrichtung zur Bestimmung eines Fahrzeugzustands,

wobei die Vorrichtung (20) Sensormittel (7) und Steuermittel (6) umfasst,
wobei die Sensormittel (7) ausgestaltet sind, um einen aktuellen Abstand (dx(0)) zwischen einem ersten Fahrzeug (2) und einem vor dem ersten Fahrzeug (2) fahrenden zweiten Fahrzeug (1), eine aktuelle Geschwindigkeit ($v_2(0)$) des ersten Fahrzeugs (2) und eine aktuelle Geschwindigkeit ($v_1(0)$) des zweiten Fahrzeugs (1) zu erfassen,
wobei die Steuermittel (6) ausgestaltet sind, um eine Länge einer kritischen Fahrstrecke zu bestimmen, wobei die kritische Fahrstrecke so definiert ist, dass das auf der kritischen Fahrstrecke fahrende erste Fahrzeug (2) nur auf der gesamten kritischen Fahrstrecke einen von der Geschwindigkeit ($v_2$) des ersten Fahrzeugs (2) abhängigen Mindestabstand zu dem zweiten Fahrzeug (1) unterschreitet, und
wobei die Steuermittel ausgestaltet sind, um den Fahrzeugzustand als kritisch zu bestimmen, wenn die Länge länger als ein vorbestimmter Längenschwellenwert ($P_5$; $P'_5$) ist.

**6.** Vorrichtung nach Anspruch 5,
**dadurch gekennzeichnet,**
**dass** die Vorrichtung (20) zur Durchführung des Verfahrens nach einem der Ansprüche 2 bis 4 ausgestaltet ist.

## Claims

**1.** Method for determining a vehicle state (11) by means of an apparatus (20) comprising sensor means (7) and control means (6), wherein the method comprises the following steps of:

using the sensor means (7) to capture a current distance (dx(0)) between a first vehicle (2) and a second vehicle (1) driving in front of the first vehicle (2), a current speed ($v_2(0)$) of the first vehicle (2) and a current speed ($v_2(0)$) of the second vehicle (1),
using the control means (6) to determine a length of a critical route of a first vehicle (2), wherein the critical route is defined such that the first vehicle (2) driving on the critical route undershoots a minimum distance from a second vehicle (1) driving in front of the first vehicle (2), which minimum distance is dependent on a speed ($v_2$) of the first vehicle (2), only on the entire critical route,
using the control means (6) to determine the vehicle state (11) as critical when the length is longer than a predetermined length threshold value ($P_5$; $P'_5$).

**2.** Method according to Claim 1,
**characterized**

**in that** the length of the critical route is determined on the basis of at least one parameter from a group of parameters, and
**in that** the group of parameters comprises:

- an acceleration ($a_1$) of the second vehicle (1),
- an acceleration ($a_2$) of the first vehicle (2),
- a response time ($t_{Reakt}$) of a driver of the first vehicle (2),
- a current speed ($v_1(0)$) of the second vehicle (1),
- a period of time ($T_{min}$) for calculating the speed-dependent minimum distance between the vehicles (1, 2),
- a current speed ($v_2(0)$) of the first vehicle (2), and
- a current distance (dx(0)) between the first vehicle (2) and the second vehicle (1).

**3.** Method according to Claim 2,
**characterized**

**in that** the length et of the critical route is calculated according to the following equation (G1) when the first vehicle (2) does not reach the critical route before the response time $t_{Reakt}$

$$et = 2c_5\left[v_2(0) + a_2\left(c_4 + t_{Reakt}\right)\right], \qquad (G1)$$

and

**in that** the length et of the critical route is calculated according to the following equation (G2) when the first vehicle (2) reaches the critical route before the response time $t_{Reakt}$

$$et = \left(3c_5 - c_4\right)v_2(0) + \frac{a_2}{2}\left(c_4 + c_5\right)^2 \qquad (G2),$$

where

$$c_5 = \sqrt{c_4{}^2 - 2\frac{c_1 - c_2}{a_1 - a_2}} \quad (G3),$$

$$c_4 = \frac{c_3}{a_1 - a_2} \quad (G4),$$

$$c_3 := -\left(dv(0) + a_1 t_{Reakt} - a_2 T_{min}\right) \,(G5),$$

$$c_2 := v_2(0)T_{min} \quad (G6),$$

and

$$c_1 := dx(0) + dv(0)t_{Reakt} + \frac{a_1}{2}t_{Reakt}{}^2 \,(G7),$$

where $a_2$ is the acceleration of the second vehicle (1), $a_2$ is the acceleration of the first vehicle (2), $t_{Reakt}$ is the response time of the driver of the first vehicle (2), $T_{min}$ is a period of time for calculating the speed-dependent minimum distance, $dv(0)$ is a current speed difference between the speed $v_2(0)$ of the first vehicle (2) and the speed $v_1(0)$ of the second vehicle (1), and $dx(0)$ is a current distance between the first vehicle (2) and the second vehicle (1).

4. Method according to one of the preceding claims,
**characterized**

**in that**, if the vehicle state (11) has been determined as critical on the basis of a parameter set (P), a further vehicle state is determined using the method according to one of the preceding claims on the basis of a further parameter set (P'),
**in that** the parameter set (P) and the further parameter set (P') comprise at least one parameter from a further group of parameters, wherein the further group of parameters comprises:

- an acceleration ($a_2$) of the second vehicle (1),
- an acceleration ($a_2$) of the first vehicle (2), and
- a response time ($t_{Reakt}$) of a driver of the first vehicle (2),
- a period of time ($T_{min}$) for calculating the speed-dependent minimum distance between the vehicles (1, 2), and
- the predetermined length threshold value,

**in that** the parameter set (P) is selected, in comparison with the further parameter set (P'), in such a manner that, under the same starting conditions, the further vehicle state is always determined as critical by the method according to one of the preceding claims on the basis of the further parameter set (P') when the vehicle state is likewise determined as critical by the method according to one of the preceding claims on the basis of the parameter set (P), and
**in that** the vehicle state (11) is only reset to noncritical when the further vehicle state is not determined as critical.

5. Apparatus for determining a vehicle state,

   wherein the apparatus (20) comprises sensor means (7) and control means (6),
   wherein the sensor means (7) are configured to capture a current distance (dx(0)) between a first vehicle (2) and a second vehicle (1) driving in front of the first vehicle (2), a current speed ($v_2(0)$) of the first vehicle (2) and a current speed ($v_1(0)$) of the second vehicle (1),
   wherein the control means (6) are configured to determine a length of a critical route, wherein the critical route is defined such that the first vehicle (2) driving on the critical route undershoots a minimum distance from the second vehicle (1), which minimum distance is dependent on the speed ($v_2$) of the first vehicle (2), only on the entire critical route, and
   wherein the control means are configured to determine the vehicle state as critical when the length is longer than a predetermined length threshold value ($P_5$; $P'_5$).

6. Apparatus according to Claim 5,
   **characterized**
   **in that** the apparatus (20) is configured to carry out the method according to one of Claims 2 to 4.

## Revendications

1. Procédé de détermination de l'état d'un véhicule (11) au moyen d'un dispositif (20), lequel comporte des moyens de détection (7) et des moyens de commande (6), le procédé comprenant les étapes suivantes :

   détection d'une distance actuelle (dx(0)) entre un premier véhicule (2) et un deuxième véhicule (1) qui circule devant le premier véhicule (2), d'une vitesse actuelle ($v_2(0)$) du premier véhicule (2) et d'une vitesse actuelle ($v_2(0)$) du deuxième véhicule (1) par les moyens de détection (7),
   détermination d'une longueur d'un trajet critique d'un premier véhicule (2) par les moyens de commande (6), le trajet critique étant défini de telle sorte que le premier véhicule (2) qui circule sur le trajet critique ne franchit vers le bas une distance minimale par rapport à un deuxième véhicule (1) qui circule devant le premier véhicule (2), laquelle dépend d'une vitesse ($v_2$) du premier véhicule (2), que sur la totalité du trajet critique,
   détermination de l'état du véhicule (11) comme étant critique par les moyens de commande (6) lorsque la longueur est plus longue qu'une valeur de seuil de longueur ($P_5$, $P'_5$) prédéterminée.

2. Procédé selon la revendication 1,
   **caractérisé en ce**

   **que** la longueur du trajet critique est déterminée en fonction d'au moins un paramètre issu d'un groupe de paramètres, et
   **que** le groupe de paramètres comprend :

   * une accélération ($a_1$) du deuxième véhicule (1),
   * une accélération ($a_2$) du premier véhicule (2),
   * un temps de réaction ($t_{Reakt}$) d'un conducteur du premier véhicule (2),
   * une vitesse actuelle ($v_1(0)$) du deuxième véhicule (1),
   * un intervalle de temps ($T_{min}$) servant à calculer la distance minimale dépendante de la vitesse entre les véhicules (1, 2),
   * une vitesse actuelle ($v_2(0)$) du premier véhicule (2), et
   * une distance actuelle (dx(0)) entre le premier véhicule (2) et le deuxième véhicule (1).

3. Procédé selon la revendication 2,
   **caractérisé en ce**

   **que** la longueur du trajet critique est calculée conformément à l'équation (G1) ci-après lorsque le premier véhicule (2) n'atteint pas le trajet critique avant le temps de réaction ($t_{Reakt}$),

$$= 2c_5[v_2(0) + a_2(c_4 + t_{Reakt})] \qquad (G1)$$

et

**que** la longueur du trajet critique est calculée conformément à l'équation (G2) ci-après lorsque le premier véhicule (2) atteint le trajet critique avant le temps de réaction ($t_{Reakt}$), et

$$= (3c_5 - c_4)v_2(0) + a_2/2(c_4 + c_5)^2 \qquad (G2),$$

où

$$c_5 = \sqrt{c_4^2 - 2\frac{c_1 - c_2}{a_1 - a_2}} \quad (G3), \quad c_4 = \frac{c_3}{a_1 - a_2} \quad (G4), \quad c_3 = -(dv(0) +$$

$$a_1 t_{Reakt} - a_2 T_{min}) \quad (G5), \quad c_2 = v_2(0)T_{min} \quad (G6) \quad \text{et} \quad c_1 = dx(0) +$$

$$dv(0)t_{Reakt} + \frac{a_1}{2}t_{Reakt}^2 \quad (G7),$$

$a_2$ désignant l'accélération du deuxième véhicule (1), $a_2$ l'accélération du premier véhicule (2), $t_{Reakt}$ le temps de réaction du conducteur du premier véhicule (2), $T_{min}$ un intervalle de temps servant à calculer la distance minimale dépendante de la vitesse, $dv(0)$ une différence de vitesse actuelle entre la vitesse $v_2(0)$ du premier véhicule (2) et la vitesse $v_1(0)$ du deuxième véhicule (1), et dx (0) une distance actuelle entre le premier véhicule (2) et le deuxième véhicule (1).

4. Procédé selon l'une des revendications précédentes, **caractérisé en ce**

**que** lorsque l'état du véhicule (11) en fonction d'un jeu de paramètres (P) a été déterminé comme étant critique, un état de véhicule supplémentaire est déterminé avec le procédé selon l'une des revendications précédentes en fonction d'un jeu de paramètres supplémentaire (P'),

**que** le jeu de paramètres (P) et le jeu de paramètres supplémentaire (P') comprennent au moins un paramètre issu d'un groupe de paramètres supplémentaire, le groupe de paramètres supplémentaire comprenant :

* une accélération ($a_1$) du deuxième véhicule (1),
* une accélération ($a_2$) du premier véhicule (2), et
* un temps de réaction ($t_{Reakt}$) d'un conducteur du premier véhicule (2),
* un intervalle de temps ($T_{min}$) servant à calculer la distance minimale dépendante de la vitesse entre les véhicules (1, 2), et
* la valeur de seuil de distance prédéterminée,

**que** le jeu de paramètres (P) est choisi en comparaison du jeu de paramètres supplémentaire (P') de telle sorte que dans des conditions initiales identiques, l'état de véhicule supplémentaire est toujours déterminé comme étant critique par le procédé selon l'une des revendications précédentes en fonction du jeu de paramètres supplémentaire (P') lorsque l'état de véhicule est également déterminé comme étant critique par le procédé selon l'une des revendications précédentes en fonction du jeu de paramètres (P), et

**que** l'état du véhicule (11) n'est ramené à non critique que lorsque l'état de véhicule supplémentaire n'est pas déterminé comme étant critique.

5. Dispositif de détermination de l'état d'un véhicule, le dispositif (20) comportant des moyens de détection (7) et des moyens de commande (6),

les moyens de détection (7) étant configurés pour détecter une distance actuelle ($dx(0)$) entre un premier véhicule (2) et un deuxième véhicule (1) qui circule devant le premier véhicule (2), une vitesse actuelle ($v_2(0)$) du premier véhicule (2) et une vitesse actuelle ($v_1(0)$) du deuxième véhicule (1),

les moyens de commande (6) étant configurés pour déterminer une longueur d'un trajet critique, le trajet critique étant défini de telle sorte que le premier véhicule (2) qui circule sur le trajet critique ne franchit vers le bas une distance minimale par rapport au deuxième véhicule (1), laquelle dépend de la vitesse ($v_2$) du premier véhicule (2), que sur la totalité du trajet critique, et

les moyens de commande étant configurés pour déterminer l'état du véhicule comme étant critique lorsque la longueur est plus longue qu'une valeur de seuil de longueur ($P_5$, $P'_5$) prédéterminée.

6. Dispositif selon la revendication 5,
   **caractérisé en ce**
   **que** le dispositif (20) est configuré pour mettre en œuvre le procédé selon l'une des revendications 2 à 4.

FIG. 1

FIG. 2

FIG. 3

S1

Wird geschwindigkeitsunabhängiger Mindestabstand eingehalten?

NEIN →

S2 | JA

Wird in geschwindigkeitsabhängigen Mindestabstand eingetaucht?

NEIN →

S3 | JA

Wird während des
Eintauchens die höchstzulässige
(Eintauch-) Strecke
überschritten?

NEIN →

JA

## FIG. 4

FIG. 5

FIG. 6

FIG. 7

FIG. 8

FIG. 9

FIG. 10

**IN DER BESCHREIBUNG AUFGEFÜHRTE DOKUMENTE**

**In der Beschreibung aufgeführte Patentdokumente**

- DE 10356307 A1
- DE 102004029369 A1
- DE 102006059915 A1
- US 20120161980 A1
- DE 102008023132 A1